(19) Europäisches Patentamt
European Patent Office
Office européen des brevets

(11) **EP 3 142 236 A1**

(12) **EUROPEAN PATENT APPLICATION**

(43) Date of publication:
**15.03.2017 Bulletin 2017/11**

(51) Int Cl.:
**H02M 1/12** $^{(2006.01)}$ **H02J 3/18** $^{(2006.01)}$
**H02M 7/49** $^{(2007.01)}$ **H02M 1/00** $^{(2007.01)}$
**H02M 7/483** $^{(2007.01)}$

(21) Application number: **15184836.3**

(22) Date of filing: **11.09.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **ABB Technology AG
8050 Zürich (CH)**

(72) Inventors:
• **Spudic, Vedrana
8047 Zürich (CH)**
• **Geyer, Tobias
8002 Zürich (CH)**
• **Oikonomou, Nikolaos
3007 Bern (CH)**

(74) Representative: **ABB Patent Attorneys
c/o ABB Schweiz AG
Intellectual Property CH-IP
Brown Boveri Strasse 6
5400 Baden (CH)**

(54) **OPTIMIZED PULSE PATTERNS FOR MMC CONTROL**

(57) The present invention is concerned with improving spectral and dynamic performance and scalability of controlling a Modular Multilevel Converter (MMC). According to the invention, a converter flux control is proposed that includes virtual converter flux tracking for a grid-connected MMC based on Optimized Pulse Patterns (OPP). The proposed flux control enables all required STATCOM tasks, including i) injection of harmonic currents and ii) unbalanced operation of the STATCOM for negative sequence current injection and operation under grid imbalances. A per-device switching frequency and switching losses are significantly decreased compared to a PWM-based control for a similar spectrum shape during nominal operation, while all spectral requirements on the output current are met. The proposed converter flux control may preferably include a Model Predictive Pulse Pattern Controller (MP3C).

Fig. 5

**Description**

FIELD OF THE INVENTION

The invention relates to the field of Modular Multilevel Converters MMC and specifically to control of an MMC STATCOM connected to an electric power grid.

BACKGROUND OF THE INVENTION

A Modular Multi-level Converter (MMC) is based on a series connection of unipolar or bipolar modules or cells in a converter leg or converter branch. The series connection of tens of modules enables line-to-line voltages in the upper medium-voltage and in the high voltage range. This feature makes the MMC topology particularly suitable for Static Synchronous Compensator (STATCOM) application. The use of MMCs provides increased reliability and cost effectiveness due to elimination of the coupling transformer.

Due to the large number of modules per branch, an MMC can generate a large number of output voltage levels. Therefore, an MMC may provide supreme harmonic performance at low per-device switching frequency, which results in low switching losses. The full utilization of this potential though heavily relies on the control system design.

In order to operate an MMC as a STATCOM, the control system needs to enable different modes of operation. The principal task of a STATCOM in nominal operation is to inject reactive positive sequence currents into the grid with the purpose of voltage regulation at a Point of Common Coupling (PCC). Additionally, the STATCOM is required to perform active power filtering, which includes the injection of negative sequence currents as well as harmonic currents into the grid with the purpose to eliminate voltage distortions at the point of common coupling. Finally, a STATCOM needs to remain operational during grid imbalances and faults, and provide fast dynamic performance. During operation the STATCOM output currents need to obey strict regulations with regard to their harmonic content and as defined by Transmission System Operators in a so-called "grid-code".

A technique called Optimized Pulse Patterns (OPP) is being used in general converter control to improve the spectrum of the converter current, while keeping the switching frequency and, consequently, switching losses, low. A typical downside of an OPP-based converter control is that it provides poor dynamic performance. Traditionally, OPP-based control systems include a very slow control loop that determines the required modulation index. Such a control approach cannot meet the dynamic performance requirements of a STATCOM application, in particular for unbalanced operation and insertion of harmonics.

The paper by Jonas E. Huber and Arthur J. Korn, entitled "Optimized pulse pattern modulation for modular multilevel converter high-speed drive", 15th International Power Electronics and Motion Control Conference EPE-PEMC 2012 ECCE Europe, 2012, investigates offline Optimized Pulse Patterns (OPP) to increase the efficiency due to reduced switching and harmonic current losses for indirect modular multilevel converters. The harmonic content of the load current produced by the MMC and provided to a motor load is of major interest as an optimization target, as the current harmonics can cause significant extra losses and heating in the motor. The pulse patterns have been optimized offline with respect to minimal harmonic distortion of the phase-to-phase voltage for arbitrary modulation indices and arbitrary numbers of modules per branch. A closed-loop capacitor voltage balancing method that enables distributed modulation is also introduced. The paper does not consider a dynamic operation of a load-free MMC exclusively connected to a power grid and operating as a STATCOM.

The patent application EP 2 469 692 A1 proposes a Model Predictive Pulse Pattern Control (MP3C) concept improving the poor dynamic performance of the OPP-based control while keeping the superior harmonic performance in order to control a machine-side inverter in a motor drive. The inverter is controlled via MP3C to produce minimal harmonic current distortions in the stator windings of an AC machine, while tracking the required stator flux reference. The control method proposed combines the merits of direct torque control and optimized pulse patterns, by manipulating in real time the switching instants of the pre-computed Optimized Pulse Patterns, so as to achieve fast closed-loop control. This MP3C may address in a unified approach the tasks of the inner current control loop and modulator for a two or three level inverter. MP3C may control a flux vector, which, in case of an electrical converter driving an electrical machine, is typically the stator flux linkage vector of the electrical machine. For grid-connected converters in STATCOM operation, a virtual flux may be defined via impedances of the grid, a filter and/or a transformer between the converter and the grid.

DESCRIPTION OF THE INVENTION

It is therefore an objective of the invention to improve spectral and dynamic performance and scalability of controlling a Modular Multilevel Converter while constraining a per device switching frequency to low values. This objective is achieved by a method, a converter controller, and a converter according to the independent claims. Preferred embodiments are evident from the dependent patent claims.

According to the invention, a converter flux control is proposed that includes virtual converter flux tracking for a grid-connected Modular Multilevel Converter (MMC) based on Optimized Pulse Patterns (OPP). The proposed flux control enables all required STATCOM tasks, including i) injection of harmonic currents and ii) unbalanced operation of the STATCOM for negative sequence current injection and operation under grid imbalances. A per-device switching frequency and switching losses are significantly decreased compared to a PWM-based control for a similar spectrum shape during nominal operation, while all spectral requirements on the output current are met. The proposed converter flux control may preferably include a Model Predictive Pulse Pattern Controller (MP3C).

Specifically, control of a Modular Multilevel Converter (MMC) with plural converter branches and plural series-connected modules per branch, where each module includes a cell capacitor and power semiconductor switches, and where the MMC is connected to an electrical power grid, comprises the following steps:

Establishing an Optimized Pulse Pattern OPP for a converter branch voltage defining, or being defined by, a sequence of switching time instants of the power semiconductor switches of the converter branch and/or by the corresponding succession of branch voltage levels. Establishing an OPP may specifically include selecting a particular OPP from a number of off-line pre-computed OPPs, wherein converter modulation based on any of the pre-computed OPP inherently meets the spectral requirements on the converter current at a low per-device switching frequency.

Determining a converter flux reference $\Psi_{\alpha\beta}^{*}$ based on a fundamental current reference $I_{SC}^{*}$ of, or for, the MMC, wherein a converter flux includes, or is defined as, an integral of converter branch voltages $\upsilon_{123}$ of the plural converter branches.

Receiving, by an OPP adapter that may be part of the Model Predictive Pulse Pattern Controller (MP3C), the converter flux reference $\Psi_{\alpha\beta}^{*}$ and an updated, or actual, converter flux estimate $\Psi_{\alpha\beta}$.

Determining, by the OPP adapter and during operation of the MMC, an adapted or modified OPP, based on the established OPP and by way of converter flux tracking, in particular by way of Model Predictive Control (MPC) including a system model of the MMC and a finite prediction horizon. The adapted OPP minimizes a difference $\tilde{\Psi}_{\alpha\beta}$ (t) between a modelled, or predicted, evolution of the converter flux reference $\Psi_{\alpha\beta}^{*}(t)$ based on the established OPP and an evolution of the converter flux estimate $\Psi_{\alpha\beta}$ (t) based on the adapted OPP. The MMC is ultimately operated according to the adapted OPP.

In an advantageous embodiment of the invention, determining the adapted OPP comprises a receding horizon strategy with the additional steps of:

Modelling the evolution of the converter flux estimate $\Psi_{\alpha\beta}(t)$ and the evolution of the converter flux reference over discrete time steps of a prediction horizon.

Identifying first adapted switching time instances of the adapted OPP that fall within the first time step of the prediction horizon.

Repeating, or reiterating, the process with updated new reference and estimated converter flux values following operation of the MMC according to the first adapted switching time instances.

In an advantageous embodiment of the invention operating the MMC invokes a cell balancing algorithm with the following steps:

Providing a change of a converter branch voltage level $\upsilon_{123}^{*}$ of a converter branch corresponding to, or indicated by, the adapted OPP to a cell balancing unit.

Identifying, by the cell balancing unit and by using additional cell balancing logic, which modules of the converter branch to switch in order to accomplish the voltage level change, and executing corresponding switching signals to switch the semiconductor switches of the identified modules.

In a preferred variant of the invention, the method enables a dynamically challenging harmonic injection and to that purpose comprises the following additional steps:

Determining, by a current controller, a fundamental frequency converter flux reference value $\overline{\Psi}^{*}_{\alpha\beta}$ from the fundamental current reference.

Performing, by the flux controller and based on the switching instants of the established OPP, an optimal switching modification or distortion of the fundamental virtual converter flux reference $\overline{\Psi}^{*}_{\alpha\beta}$ to produce an optimally modified, or distorted, fundamental flux reference $\Psi^{*}_{\alpha\beta}$.

In a further preferred variant of the invention, the method comprises the steps of:

Receiving, from a harmonic current controller, a harmonic flux reference $\overline{\Psi}^{*}_{\alpha\beta,hh}$.

Adding the optimally modified fundamental flux reference $\Psi^{*}_{\alpha\beta}$ and the harmonic flux reference $\overline{\Psi}^{*}_{\alpha\beta,hh}$ to produce the converter flux reference $\Psi^{*}_{\alpha\beta}$ for the pattern controller.

In an advantageous embodiment of the invention, the method comprises the steps of

Establishing, by the current controller, a first OPP and a second OPP for a respective first and a second converter branch of the plural converter branches of the MMC, wherein the first and second OPP have a relative phase shift different from 120° and/or different OPP modulation indices, and wherein the first and second OPP are devoid of at least a lowest order triplen harmonics. Using distinct, branch-specific OPPs for the converter branches may help constraining a common node voltage of the converter in an unbalanced operation.

BRIEF DESCRIPTION OF THE DRAWINGS

The subject matter of the invention will be explained in more detail in the following text with reference to preferred exemplary embodiments which are illustrated in the attached drawings, in which:

Fig.1    shows a conventional MMC STATCOM control system;
Fig.2    shows an MMC STATCOM control system according to the invention;
Fig.3    depicts an exemplary OPP described by the phase angles;
Fig.4    depicts $\alpha\beta$ components of a corresponding nominal converter flux trajectory;
Fig.5    shows a structure of a Model Predictive Pulse Pattern Controller MP3C;
Fig.6    depicts the converter flux error; and
Fig.7    shows a structure of a controller that enables harmonic injection.

DETAILED DESCRIPTION OF PREFERRED EMBODIMENTS

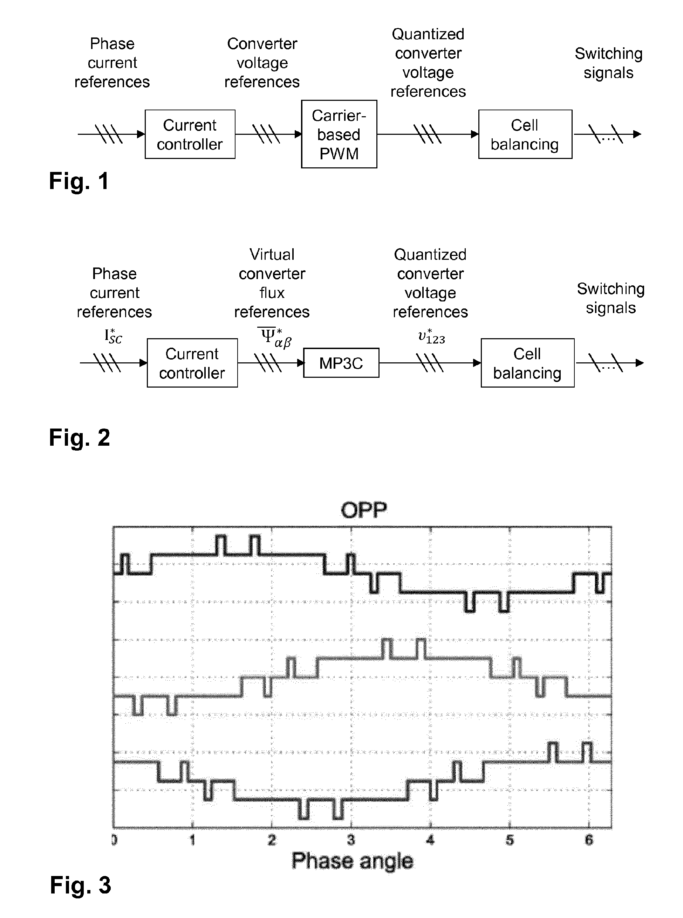

Fig.1 shows a conventional MMC STATCOM control system comprising a current control loop (based on PI or hysteresis-based controller), followed by a multilevel carrier-based PWM or SVM used as a modulator. The cell balancing algorithm of the lower control level utilizes the redundancy in the converter states (i.e. group of switching states that produce the same line to line voltage) in order to balance the cell capacitor voltages. With reactive power production being a nominal operating scenario for an MMC STATCOM, the task of the controller is to track the STATCOM output current references $I^{*}_{SC}$, which are 90° phase shifted from the grid voltage. The output current references $I^{*}_{SC}$ are obtained from a superordinate control system including a control loop that regulates the voltage at a Point of Common Coupling (not depicted).

Each MMC converter branch consists of M modules or cells, which contain a capacitor and two or four power semiconductor switches. The cells may be of bipolar type producing the voltages $+v_{cap}$ and $-v_{cap}$ at their terminals. Alternatively, the same functionality of a converter branch can be accomplished by using unipolar cells, but with twice as many modules.

The control strategy proposed relies on two parts, including i) an off-line generation of the OPPs for a low per-device switching frequency that meet the spectral requirements; and ii) an on-line OPP-based control design that enables fast and precise output current tracking. In the following, the second, on-line part is elaborated.

Fig.2 shows the structure of the on-line control system proposed, including a current controller, which (unlike the one in Fig.1) translates the current references $I^*_{SC}$ to a virtual converter flux reference $\overline{\Psi}^*$, typically at a control sampling rate in the range of microseconds. A virtual converter flux $\overline{\Psi}_{123}$ is defined as an integral of switched converter branch voltages $v_{123}$. The determination of the virtual converter flux reference from the current references may further be based on an impedance of the converter including an impedance of a transformer, a filter and/or a branch inductor of the converter. In addition, the translation or determination may require a) an estimate of the *fundamental component* of the virtual flux at a Point of Common Coupling PCC as the integral of a voltage measured at PCC, or b) an estimate of the grid flux by definition containing only fundamental component, and the impedance of the grid.

A multi-level Model Predictive Pulse Pattern Controller (MP3C) controller is employed to track these virtual converter flux references as detailed below. The tracking of the flux references is accomplished by shifting the switching instances of the precomputed OPPs. OPPs corresponding to different modulation indices (and possibly different pulse numbers) are precomputed and stored into a look-up table, but different OPPs are loaded and used for control only in the case of major changes in the flux reference. For minor changes caused by continuous system disturbances such as the ripple of the module capacitor voltages, the accurate current tracking is accomplished by slight modifications of the OPP switching instances of a previously selected OPP. The cell balancing algorithm decides which modules in the branch to insert and essentially operates as in the conventional MMC control.

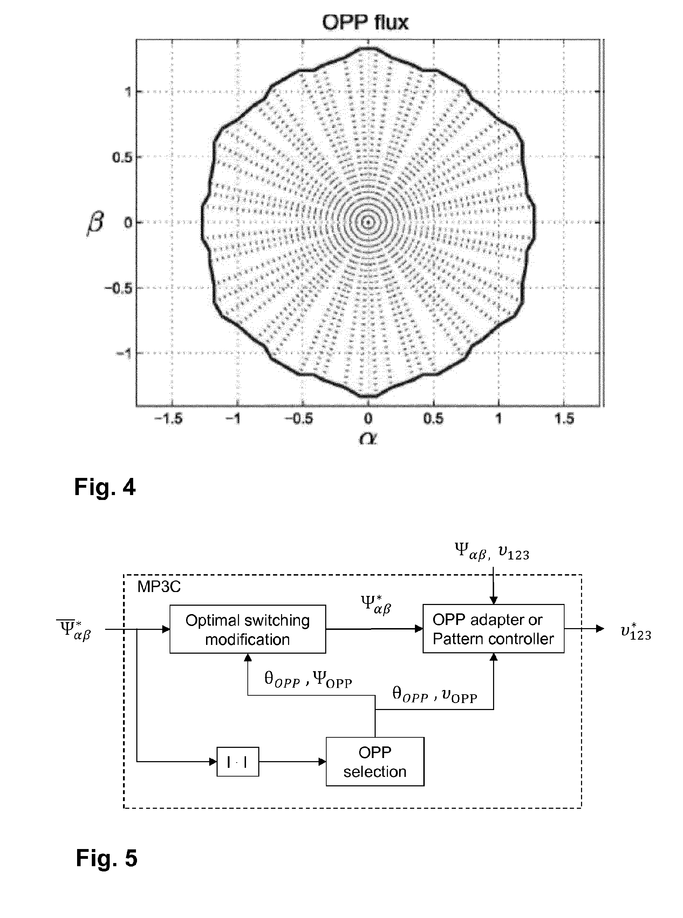

Fig.3 depicts an exemplary OPP described by the phase angles $\phi_i$ and the new OPP voltage level $v_i$ at the switching instances *i* for each of the three branches. The OPP sequences cover a cycle of $2\pi$ at a power system frequency, e.g. a period of 20 ms. Fig.4 depicts $\alpha\beta$ components of a corresponding nominal converter flux trajectory including an integral of the pulse patterns in $\alpha\beta$ coordinates. The nominal OPP flux trajectory is obtained under the assumptions that the same OPP is used for modulation in every converter branch and that the relative phase shift between the branch voltages is 120°. The resulting OPP flux is uniquely described by the phase angles $\phi_{OPP,i}$ and the OPP flux $\Psi_{OPP,i}$ at the switching instances $i = 1, ...,N$. To obtain a flux reference between the switching instances the linear interpolation may be used without introducing any error.

Fig.5 depicts the structure of the MP3C of Fig.2 for translating a non-quantized converter flux reference $\overline{\Psi}^*_{\alpha\beta}$ into a quantized branch voltage reference $v^*_{123}$ indicative of the number of modules which need to be inserted in a branch to ensure that the converter flux $\Psi_{\alpha\beta}$ tracks the reference $\overline{\Psi}^*_{\alpha\beta}$. In detail, the operation of an MP3C controller for an MMC includes the steps of

i) Selecting an OPP based on a modulation index corresponding to the flux reference $\overline{\Psi}^*_{\alpha\beta}$ or to a voltage reference.

A new OPP is selected only if the modulation index is different from the modulation index of the currently selected OPP by a certain predefined threshold and/or additional criteria.

ii) Mapping of a fundamental flux reference $\overline{\Psi}^*_{\alpha\beta}$ generated by the current controller irrespective of any OPP onto a piecewise-affine and optimally modified flux reference $\Psi^*_{\alpha\beta}$ that incorporates, or respects, the optimal switching modification of the selected OPP.

iii) Shifting, in an OPP adapter or pattern controller, the switching instances of the OPP in such way that the converter flux tracks the optimally modified converter flux trajectory. As a result, in a case with no disturbances in the system the branch voltage will have the exact shape of the OPP. When the disturbances are present, the OPP switching instances will be shifted as little as possible to keep the flux on the required trajectory.

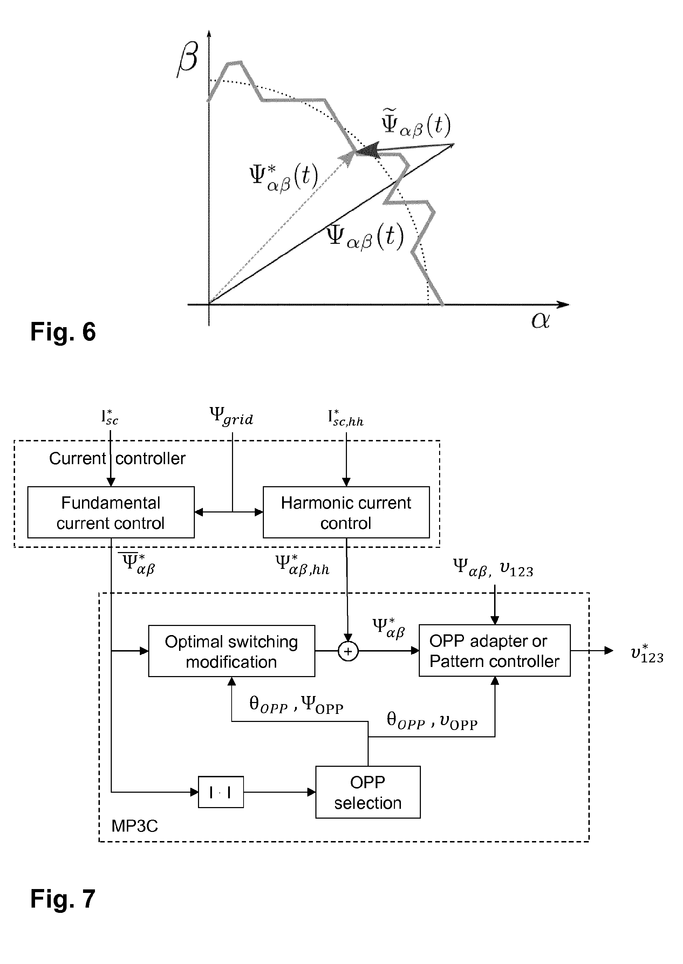

Fig.6 depicts the converter flux error $\widetilde{\Psi}_{\alpha\beta}(t) = \Psi^*_{\alpha\beta}(t) - \Psi_{\alpha\beta}(t)$ that the pattern controller has the task of eliminating by manipulating the switching instances of the OPP. When a positive pulse is pushed forward in time, the flux (i.e. the integral of voltage) will be reduced; while when the positive pulse is pushed backward in time, the flux will be increased. The opposite is valid for negative pulses.

The pattern controller is a Model Predictive Controller (MPC) that uses a system model of the MMC to predict the evolution of the system, specifically to provide a flux prediction as follows

$$\Psi_{\alpha\beta}(t) = M_{\alpha\beta}V_{cap,nom}\int_{t_0}^{t_0+t} v_{OPP}(\tau)d\tau + \Psi_{\alpha\beta}(t_0)$$

In the above equation $v_{OPP}$ are the branch voltages that correspond to the selected OPP, and $\Psi_{\alpha\beta}(t_0)$ is the updated, actual converter flux estimate. The matrix $M_{\alpha\beta}$ describes the transformation from abc to $\alpha\beta$ reference frame and $V_{cap,nom}$ is the nominal module capacitor voltage. Optionally, measured mean capacitor voltage can be used instead of $V_{cap,nom}$ or, potentially, prediction model can be utilized to predict the mean capacitor voltage. With the flux reference and the flux prediction both being based on the selected non-manipulated OPP the converter flux error $\tilde{\Psi}_{\alpha\beta}(t)$ is constant throughout the prediction horizon.

The MPC minimizes an objective function subject to constraints on a finite prediction horizon. The objective function is to track the flux reference by applying voltage references to the converter branches that minimally differ from the established OPPs, i.e. the switching instances are minimally shifted compared to the precomputed OPP voltage. The constraints impose the order of switching events in every branch of the converter. The optimization problem is formulated as

$$\min_{\Delta t} J(\Delta t) = \left\| \widetilde{\Psi}_{\alpha\beta} - \Psi_{\alpha\beta.corr}(\Delta t) \right\|_2^2 + \Delta t^T Q \Delta t$$

with the corrections or deviations from nominal of the individual switching instants or transition times $\Delta t_i$ aggregated in the single optimization variable $\Delta t$, and with the function $\Psi_{\alpha\beta.corr}(\Delta t)$ describing the influence of the switching time corrections on the flux.

The MPC utilizes a receding horizon control policy. The shifts of the control instances that minimize the flux error are planned for an entire prediction horizon with a duration of up to several milliseconds and comprising discrete control steps separated by time intervals of typically 25 microseconds. However only the shifts planned for the first control step are applied to the system. In the next control step the optimization is repeated with the newly estimated converter flux and starting from the nominal OPP. The set-up of the optimization problem may include on optimal control approach or a dead beat approach, the latter resulting in a more aggressive behaviour of the controller which leads to better reference tracking at the expense of increased OPP modification.

Fig.7 depicts a control structure based on the MP3C of Fig.5 that enables harmonic injection. In addition to the fundamental current reference $I_{SC}^*$, the current controller obtains a harmonic current reference $I_{SC,hh}^*$ from the superimposed control loop. A feed-forward branch of a harmonic current controller provides a harmonic flux reference $\overline{\Psi}_{\alpha\beta,hh}^*$ as

$$\overline{\Psi}_{\alpha\beta,hh}^* = \sqrt{3} M^T (\frac{1}{3} L_b + L_{sc} + L_g) i_{sc,\alpha\beta,hh}^*$$

where $L_b$, $L_{sc}$, $L_g$ are system inductances, and where $i_{SC,\alpha\beta,hh}^*$ is a harmonic Statcom output current in $\alpha\beta$ coordinate system. The harmonic flux reference $\overline{\Psi}_{\alpha\beta,hh}^*$ is added to the optimally modified harmonic current reference. The tracking of the cumulative flux reference $\Psi_{\alpha\beta}^*$ ensures the existence of the required harmonic content in the output current. This control setup can be used for tracking of any kind of reference, in other words, $I_{SC}^*$ may include a single harmonic, several harmonics, or it can be a general reference which is not periodic with the fundamental reference. Furthermore, this principle can be used to track the current references that are not symmetrical in the phases. The pattern controller in the MP3C is essentially the same as in the case with no harmonic injection.

Unbalanced operation of an MMC STATCOM includes two typical scenarios, the injection of a negative sequence current into the grid and operation under grid imbalances. The unbalanced operation is characterized by the requirement for different voltage amplitudes and different voltage phase angles in different branches. Unlike in the nominal operation where the flux optimal reference trajectories corresponding can be precomputed offline, for unbalanced operation this mapping will have to be computed on-line because the optimal flux reference is different for every combination of amplitude and phase angles of branch voltages.

In order to accommodate the requirement that every converter branch has a different amplitude and phase angle, different OPPs are used for different branches, where the different OPPs do not merely result in a relative phase shift between the branch voltages of 120°.

A drawback in using three different OPPs in three branches is that they might produce very high common mode voltage, which is not the case when using the same OPP for all the three branches. As the common mode of the converter branches consists of all triplen harmonics in the spectrum of the branch voltages, the method proposed here a-priori eliminates the common mode voltage by eliminating the triplen harmonics from the OPPs at the OPP design stage. There are several ways to accomplish that. One way is to impose constraints during the OPP design to eliminate the triplen harmonics. However, since the common mode is composed of infinitely many triplen harmonics, not all of them may be eliminated in such way. But for practical purposes, eliminating only the triplen harmonics in the low end of the spectrum is often enough. The second way is to design the OPPs with common mode voltage and then recompute the OPPs in such way that the common mode is completely eliminated.

Ultimately, the proposed methods as detailed in the foregoing may well be complemented by pulse insertion, specifically to improve tracking during harmonic injection. Exemplary pulse insertion into original OPPs with the purpose of achieving fast transients is disclosed in the patent application EP 2891241 A1.

The features of the method of controlling a grid-connected MMC STATCOM and the converter controller as described herein may be performed by way of hardware components, firmware, and/or a computing device having processing means programmed by appropriate software. For instance, the converter controller can include any known general purpose processor or integrated circuit such as a central processing unit (CPU), microprocessor, field programmable gate array (FPGA), Application Specific Integrated Circuit (ASIC), or other suitable programmable processing or computing device or circuit as desired. The processor can be programmed or configured to include and perform features of the exemplary embodiments of the present disclosure such as, a method of controlling a grid connected MMC STATCOM. The features can be performed through program or software code encoded or recorded on the processor, or stored in a non-volatile memory accessible to the processor, such as Read-Only Memory (ROM), erasable programmable read-only memory (EPROM), or other suitable memory or circuit as desired. In another exemplary embodiment, the program or software code can be provided in a computer program product having a non-transitory computer readable recording medium such as a hard disk drive, optical disk drive, solid state drive, or other suitable memory device or circuit as desired, the program or software code being transferable or downloadable to the processor for execution when the non-transitory computer readable medium is placed in communicable contact with the processor.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

**Claims**

1. A method of controlling a grid-connected Modular Multilevel Converter MMC STATCOM with plural converter branches and plural modules per converter branch, each module including a cell capacitor and power semiconductor switches, comprising

   - establishing an Optimized Pulse Pattern OPP defining a sequence of switching time instants and branch voltage levels of a converter branch;

   - determining a converter flux reference $\Psi_{\alpha\beta}^*$ based on a fundamental current reference $I_{SC}^*$ of the MMC, wherein a converter flux includes an integral of converter branch voltages $\upsilon_{123}$ of the plural converter branches;

   - receiving, by an OPP adapter, the converter flux reference $\Psi_{\alpha\beta}^*$ and a converter flux estimate $\Psi_{\alpha\beta}$;

   - determining, during operation of the MMC, an adapted OPP that minimizes a difference $\tilde{\Psi}_{\alpha\beta}(t)$ between an evolution of the converter flux reference $\Psi_{\alpha\beta}^*(t)$ based on the established OPP and an evolution of the converter flux estimate $\Psi_{\alpha\beta}(t)$ based on the adapted OPP; and

   - operating the MMC according to the adapted OPP.

2. The method of claim 1, wherein the step of determining the adapted OPP comprises

   - modelling the evolution of the converter flux estimate $\Psi_{\alpha\beta}(t)$ and the evolution of the converter flux reference over discrete time steps of a finite prediction horizon;

- identifying first adapted switching time instances of the adapted OPP that fall within the first step of the prediction horizon, and
- repeating the steps of the method following operation of the MMC according to the first adapted switching time instances.

**3.** The method of claim 1, wherein the step of operating the MMC comprises

- providing a change of a converter branch voltage level $v^*_{123}$ corresponding to the adapted OPP to a cell balancing unit;
- identifying, by the cell balancing unit, which modules to switch in order to accomplish the voltage level change; and
- switching the semiconductor switches of the identified modules.

**4.** The method of claim 1, wherein the step of determining the converter flux reference $\Psi^*_{\alpha\beta}$ comprises

- determining a fundamental converter flux reference $\overline{\Psi}^*_{\alpha\beta}$ from the fundamental current reference
- performing, based on the switching instants of the established OPP, an optimal switching modification of the fundamental converter flux reference $\overline{\Psi}^*_{\alpha\beta}$ to produce the converter flux reference $\Psi^*_{\alpha\beta}$ .

**5.** The method of claim 4, further comprising

- receiving a harmonic flux reference $\overline{\Psi}^*_{\alpha\beta,hh}$ ;
- adding the harmonic flux reference $\overline{\Psi}^*_{\alpha\beta,hh}$ to the converter flux reference $\Psi^*_{\alpha\beta}$ for OPP adapter.

**6.** The method of claim 1, wherein the step of establishing an Optimized Pulse Pattern OPP comprises

- establishing a first OPP and a second OPP for a respective first and a second converter branch, wherein the first and second OPP have a relative phase shift different from 120° and/or different OPP modulation indices, and wherein the first and second OPP are devoid of at least a lowest order triplen harmonics.

**7.** A converter controller for controlling a grid-connected Modular Multilevel Converter MMC STATCOM, configured to execute the method according to any of the preceding claims.

**8.** A Modular Multilevel Converter MMC STATCOM with plural converter branches and plural modules per converter branch, each module including a cell capacitor and power semiconductor switches, the MMC STATCOM being connected to an electric power grid for static VAr compensation or for compensation of harmonics and grid imbalances, and being controlled by a converter controller as claimed in claim 7.

Phase
current
references

Converter
voltage
references

Quantized
converter
voltage
references

Switching
signals

**Fig. 1**

Phase
current
references

Virtual
converter
flux
references

Quantized
converter
voltage
references

Switching
signals

**Fig. 2**

**Fig. 3**

OPP flux

**Fig. 4**

**Fig. 5**

**Fig. 6**

**Fig. 7**

Europäisches
Patentamt

European
Patent Office

Office européen
des brevets

## EUROPEAN SEARCH REPORT

Application Number

EP 15 18 4836

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 469 692 A1 (ABB RESEARCH LTD [CH]) 27 June 2012 (2012-06-27) * the whole document * | 1-8 | INV. H02M1/12 H02J3/18 H02M7/49 |
| A | Javier Muñoz ET AL: "Control of Multilevel STATCOMs" In: "Static Compensators (STATCOMs) in Power Systems", January 2015 (2015-01), Springer Singapore, Singapore, XP055258451, ISBN: 978-981-2872-81-4 pages 265-311, DOI: 10.1007/978-981-287-281-4, * section 8.2.1 * | 1-8 | ADD. H02M1/00 H02M7/483 |
| A | RAHMATI A ET AL: "Sensorless Direct Power Control for a DSTATCOM", UNIVERSITIES POWER ENGINEERING CONFERENCE, 2006. UPEC '06. PROCEE DINGS OF THE 41ST INTERNATIONAL, IEEE, PI, September 2006 (2006-09), pages 1001-1005, XP031095029, DOI: 10.1109/UPEC.2006.367630 * page 1001 - page 1002 * | 1-8 | |
| | | | TECHNICAL FIELDS SEARCHED (IPC) |
| | | | H02M H02J |
| A | VAZQUEZ SERGIO ET AL: "Predictive Optimal Switching Sequence Direct Power Control for Grid-Connected Power Converters", IEEE TRANSACTIONS ON INDUSTRIAL ELECTRONICS, IEEE SERVICE CENTER, PISCATAWAY, NJ, USA, vol. 62, no. 4, April 2015 (2015-04), pages 2010-2020, XP011574540, ISSN: 0278-0046, DOI: 10.1109/TIE.2014.2351378 [retrieved on 2015-03-06] * the whole document * | 1-8 | |

The present search report has been drawn up for all claims

| Place of search | Date of completion of the search | Examiner |
|---|---|---|
| The Hague | 18 March 2016 | Lochhead, Steven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 3 142 236 A1**

## ANNEX TO THE EUROPEAN SEARCH REPORT
## ON EUROPEAN PATENT APPLICATION NO.

EP 15 18 4836

18-03-2016

| Patent document cited in search report | | Publication date | Patent family member(s) | | Publication date |
|---|---|---|---|---|---|
| EP 2469692 | A1 | 27-06-2012 | CN | 102545588 A | 04-07-2012 |
| | | | EP | 2469692 A1 | 27-06-2012 |
| | | | JP | 2012139092 A | 19-07-2012 |
| | | | KR | 20120073151 A | 04-07-2012 |
| | | | RU | 2011152831 A | 27-06-2013 |
| | | | US | 2012161685 A1 | 28-06-2012 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2469692 A1

- EP 2891241 A1

**Non-patent literature cited in the description**

- **JONAS E. HUBER ; ARTHUR J. KORN.** Optimized pulse pattern modulation for modular multilevel converter high-speed drive. *15th International Power Electronics and Motion Control Conference EPE-PEMC 2012 ECCE Europe*